Europäisches Patentamt

**European Patent Office**

**Office européen des brevets**

(11) Veröffentlichungsnummer: **0 027 534**
**B1**

(12) **EUROPÄISCHE PATENTSCHRIFT**

(45) Veröffentlichungstag der Patentschrift:
27.10.82

(51) Int. Cl.³: **C 04 B 35/52,** C 04 B 35/66,
C 25 C 3/08, C 04 B 37/00

(21) Anmeldenummer: **80105404.0**

(22) Anmeldetag: **10.09.80**

(54) **Kohlenstoffhaltige Kontaktmasse.**

(30) Priorität: **20.10.79 DE 2942469**

(43) Veröffentlichungstag der Anmeldung:
**29.04.81 Patentblatt 81/17**

(45) Bekanntmachung des Hinweises auf die Patenterteilung:
**27.10.82 Patentblatt 82/43**

(84) Benannte Vertragsstaaten:
**AT CH DE FR GB IT LI NL SE**

(56) Entgegenhaltungen:
**DE-A-1 671 179**
**DE-B-1 104 880**
**DE-B-1 236 392**
**GB-A-1 040 660**
**GB-A-1 441 095**
**US-A-2 270 199**
**US-A-4 001 104**

(73) Patentinhaber: **SIGRI ELEKTROGRAPHIT GMBH,
Werner von Siemens-Strasse 18, D-8901 Meitingen (DE)**
Patentinhaber: **Schweizerische Aluminium AG,
CH-8212 Neuhausen am Rheinfall (CH)**

(72) Erfinder: **Eckel, Wolf-Dietrich, Dr. Dipl.-Chem.,
Rauschenbachstrasse 3, D-6000 Frankfurt 56 (DE)**
Erfinder: **Schulz, Eckhard, Dr., Reinerzerweg 7,
D-6380 Bad Homburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Kohlenstoffhaltige Kontaktmasse

Die Erfindung betrifft eine kalt verarbeitbare ein teerhaltiges carbonsierbares Bindemittel und als Feststoff Graphit- und Metallpulver enthaltende Kontaktmasse.

Bei der Verwendung von Kohlenstoff- und Graphitgegenständen, z. B. als Elektrode bei der Schmelzflußelektrolyse des Aluminiums oder als Ofenstein in metallurgischen Öfen, stellt sich häufig die Aufgabe, die einzelnen Gegenstände oder Teile zu einer auch bei höheren Temperaturen beständigen Gesamtheit zu verbinden, wobei die Verbindungsstellen zudem eine gute thermische und elektrische Leitfähigkeit aufweisen sollen. Das Problem konnte bisher nur für Spezialfälle befriedigend gelöst werden. Da die Werkstoffe Kohlenstoff und Graphit im allgemeinen nicht schweißbar sind, benutzt man zum Herstellen der Verbindungen carbonisierbare Binder enthaltende Kitt- oder Kontaktmassen, die in einen Spalt geeigneter Breite zwischen den zu verbindenden Körpern gefüllt und durch Erhitzen in Kohlenstoff übergeführt werden als Verbindungsmittel. Für das Einfüllen des im folgenden als Kontaktmasse bezeichneten Kitts in die Spalten ist eine hinreichende Bildsamkeit oder Plastizität nötig, d. h., als Binder Steinkohlen- oder Petrolpeche enthaltende Massen müssen vor dem Verkitten auf eine ihren Erweichungspunkt um etwa 100° C übersteigende Temperatur erhitzt werden. Dafür sind besondere Vorrichtungen nötig, wie beheizbare Mischmaschinen, die mit Einrichtungen zum Messen und Regeln der Massetemperatur versehen sind Ohne diesen verhältnismäßig großen technischen Aufwand können Schäden der Kontaktmasse infolge örtlicher Überhitzungen oder dergleichen kaum ausgeschlossen werden. Wegen der Zunahme der Zähigkeit der Kontaktmasse mit sinkender Temperatur sind schließlich verhältnismäßig hohe Verarbeitungstemperaturen nötig, bei denen noch größere Mengen Teeröle und andere möglicherweise physiologisch nicht unbedenkliche Stoffe emittiert werden.

Da in der Praxis diese Bedingungen nicht immer erfüllt werden können, entspricht die Güte der Verbindungen gegebenenfalls den Erwartungen nicht. Kontaktmassen mit einem Pechbinder weisen zudem eine andere, ihre Verwendbarkeit einschränkende Eigenschaft auf. Erst oberhalb von etwa 500° C — nach abgeschlossener Verkokung — bildet sich eine feste mechanisch belastbare und eine verhältnismäßig günstige elektrische und thermische Leitfähigkeit aufweisende Verbindung zwischen den verklebten Teilen aus. Kalt verarbeitbare Kontaktmassen weisen die geschilderten Nachteile nicht auf, und es sind entsprechend zahlreiche Massen der unterschiedlichsten Zusammensetzung vorgeschlagen worden. Als Bindemittel enthalten kalt verarbeitbare Kontaktmassen im allgemeinen Harze, die durch Erwärmen ausgehärtet werden oder einen besonderen den Härtungsprozeß beschleunigenden Katalysator enthalten, der ein Härten des Harzes bereits bei Raumtemperatur bewirkt. Durch Zugabe von Lösungs- oder Verdünnungsmitteln kann man die Plastizität dieser Massen dem jeweiligen Verwendungszweck im gewissen Umfang anpassen. Andererseits weisen harzhaltige Kontaktmassen nur eine begrenzte Lagerfähigkeit auf, falls sie nicht bei tieferen Temperaturen, beispielsweise in Kühlkammern, gelagert werden.

Alle Kontaktmassen enthalten neben dem Binder eine sogenannte Feststoffkomponente, die das Schrumpfen des Binders während des Verkokungsprozesses vermindert und die thermische und elektrische Leitfähigkeit der »grünen« und der verkokten Kontaktmasse verbessern soll. Als Feststoffanteile verwendet man bevorzugt Kohlenstoff- und Graphitsorten, deren chemische und thermische Beständigkeit den Eigenschaften der zu verbindenden Kohlenstoff- und Graphitkörper entsprechen, z. B. Anthrazit, Kokse, Ruß und Graphit. Geeignet sind auch feuerfeste keramische Werkstoffe, z. B. Dolomit, Korund, Periklas und dergleichen. Allgemein werden unter dem Terminus Feststoffe Stoffe verstanden, die bei der Anwendung der Kontaktmasse im wesentlichen stofflich unverändert bleiben. Anteil und Korngröße der Feststoffe werden unter anderem durch die Breite des auszufüllenden Verbindungsspaltes bestimmt, wobei mit zunehmender Spaltbreite im allgemeinen auch Anteil und Korngröße der Feststoffkomponente zunehmen. Bei bestimmungsgemäßer Verwendung können mit den Kontaktmassen Festigkeiten für die Verbindung erzielt werden, die im allgemeinen für den jeweiligen Zweck ausreichen. Nicht ausreichend ist hingegen in vielen Fällen die thermische und elektrische Leitfähigkeit der Verbindungen, und zur Behebung dieses Mißstandes ist unter anderem die Zugabe von Metallpulvern oder Metallspänen vorgeschlagen worden, soweit die Verwendungstemperatur dies zuläßt. Beispiele hierfür sind DE-B-1 236 392, GB-A-883 676 und US-A-4 001 104.

Ein wesentlicher Nachteil der bekannten Kontaktmassen besteht darin, daß die erreichbaren Eigenschaften der Verbindung wesentlich durch die Herstellungsbedingungen einschließlich Erhitzungsgeschwindigkeit und Erhitzungszeit bestimmt werden, wobei die mit der Erhitzung verbundenen Parameter durch den jeweiligen Verwendungszweck gegeben sind. Man verwendet daher im allgemeinen für verschiedene Verwendungszwecke auch verschiedene Massen, die auf die jeweiligen Erhitzungsbedingungen abgestimmt sind. Zum Beispiel ist durch DE-C-1 558 744 eine Kontaktmasse zum Herstellen einer Verbindung zwischen einem metallischen Leiter und einer Kohlenstoffanode für eine Aluminium-Elektrolysezelle bekannt, die Furfurylalkoholharz und mit einem sauren Katalysator imprägnierte Graphitpartikel enthält. Eine Kontaktmasse für die Herstellung einer Verbindung zwischen einem metallischen Leiter und Kohlenstoffkathoden für die gleiche Elektrolyse bsteht nach der GB-A-883 676 aus einem Graphiteinlagerungsverbindungen, Graphit- oder Metallpulver und Phenol- und Furanharze enthaltenden Gemisch. Als Verbindung zwischen den einzelnen Kohlenstoffkathoden für die gleiche Elektrolyse ist durch DE-A-2 509 550 schließlich eine Kontaktmasse bekannt, die im wesentlichen aus einem Gemisch aus Anthrazit, Pech und Methylnaphthalin besteht. Für die funktionell zusammenwirkenden Teile einer Elektrolysezelle gibt es somit drei verschiedene vorteilhafte Kontaktmassen. Eine andere durch die US-A-2 270 199 bekanntgewordene Masse zum Verbinden von Teilen aus Graphit enthält als Feststoff Graphitpulver, dem wie oben beschrieben zur Erhöhung der Leitfähigkeit Metallpulver zugesetzt sein kann und als Binder ein Gemisch aus Teer, einer halogenierten organischen Verbindung und gegebenenfalls einem Lösungsmittel. Die als »hardening agent« bezeichnete halogenierte organische Verbindung ist ein Dehydrierungskatalysator von Friedel-Craft-Typ, dessen Wirksamkeit wesentlich durch die Temperatur der Masse bestimmt ist. Wegen dieser Temperaturabhängigkeit sind Art und Menge des Katalysators den Anwendungsbedingungen möglichst genau anzupassen, wodurch die Verwendung der Masse sehr erschwert wird. Es sind schließlich Preßmassen bekannt, die als Binder ein Gemisch aus Teer und Epoxidharz (GB-A-1 441 095) oder ausschließlich Epoxidharz (DE-A-1 671 179) enthalten. Diesen Massen ist zur Härtung des Epoxidharzes ein besonderer Härter zugesetzt, z. B. Diaminverbindungen. Der Teeranteil nach der Lehre der GB-A-1 441 095 weist einen Erweichungspunkt von 60 bis 90°C (Ring und Kugel) auf und das Epoxid enthält 15 bis 25 Gew.-% Sauerstoff, so daß die Masse nur bei einer höheren Temperatur gemischt und gepreßt werden kann, z. B. zwischen 120 bis 180°C. Die Verwendbarkeit der Masse ist dadurch ebenfalls beschränkt. Ausschließlich aus Epoxidharz bestehende Binder kohlenstoffhaltiger Massen ergeben beim Erhitzen besonders formbeständige Preßkörper, soweit nach der Lehre der DE-A-1 671 179 ein Gemisch aus einem Epoxidharz aus einem Polyglycidylether eines mehrwertigen Phenols mit einem Anhydrid einer mehrbasischen Carbonsäure verwendet wird. Die Formbeständigkeit ist für Kontaktmassen nur von geringer Bedeutung, wichtig ist vor allem eine hohe sich über den gesamten Verwendungsbereich erstreckende Plastizität, die von der obengenannten Preßmasse nicht erreicht wird.

Für die Auskleidung von Öfen, z. B. Hochöfen zur Erzeugung von Eisen, für Stichlochmassen und dergleichen, verwendet man wiederum eine Vielzahl voneinander verschiedenen Kontaktmassen. Es ist daher eine Aufgabe der vorliegenden Erfindung, eine Kontaktmasse mit einem breiteren Verwendungsspektrum zu schaffen, die gegen Streuungen und Änderungen der Verarbeitungsbedingungen wesentlich weniger empfindlich ist als die bekannten Massen und mit einem geringeren Aufwand hergestellt werden kann. Nach einer zweiten Aufgabe soll die Masse bei Raumtemperatur eine hohe Plastizität und bereits vor der Carbonisierung der Binderkomponente eine hohe thermische und elektrische Leitfähigkeit aufweisen.

Die Aufgabe wird mit einer Kontaktmasse gelöst, die als Binder ein Gemisch aus Epoxidharz mit einem Schmelzpunkt von weniger als 5°C und einem Teer, der 5 bis 15 Gew.-% in Benzol lösliche Anteile und einen Verkokungsrückstand von wenigstens 20% aufweist, und zum Härten des Epoxidharzes einen säurefreien Härter enthält.

Nach einer bevorzugten Ausbildung der Erfindung besteht die Kontaktmasse aus 15—30 Gew.-Teilen Binder, 1—5 Gew.-Teilen Härter und 65—85 Gew.-Teilen Feststoff. Das Bindergemisch enthält insbesondere 5—15 Gew.-Teile Epoxidharz und 8—20 Gew.-Teile Teerpech, das Gewichtsverhältnis Metallpulver/Graphitpulver im Feststoffgemisch beträgt zweckmäßig 1 : 1 bis 3 : 1.

Als Epoxidharze sind besonders Typen mit einem Festpunkt <5°C geeignet, die bei den bei der Herstellung der Kontaktmasse herrschenden Temperaturen flüssig sind. Das Molgewicht dieser Typen ist etwa 250 bis 350. Die bestimmungsgemäß verwendeten Härter sind säurefrei; vorteilhaft verhalten sich besonders Polyamine, z. B. Äthylendiamin, Triäthylentetramin oder Hexamethylentetramin. Nach Zusatz des Härters vernetzt das Harz bei Raumtemperatur innerhalb von etwa 10 bis 24 h. Falls erwünscht kann die Aushärtung durch gelindes Erwärmen der Masse beschleunigt werden. Unter »Härter« werden chemisch wirkende Zusätze verstanden, die man bestimmten härtbaren Kunstharzen beimischt, um deren Härtung auszulösen oder zu beschleunigen (Römpps Chemie-Lexikon, 7. Aufl., Bd. 3, Stuttgart 1973).

Unter dem Terminus »Teer« werden bei Raumtemperatur flüssige, bei der Pyrolyse bituminöser Stoffé gebildete vorwiegend aromatische Verbindungen enthaltende Stoffgemische verstanden, z. B. Kokereiteere und Schwelteere auf Steinkohlenbasis, Braunkohlenschwelteere oder erdölstämmige Petrolteere. Die Teere sollen etwa 5 bis 15% in Benzol unlösliche Anteile enthalten und der Verkokungsrückstand soll zweckmäßig wenigstens 20% betragen. Bei Raumtemperatur beträgt die Zähigkeit der Teere ca. 1 Ns/m². Als Metallanteil der Feststoffkomponente eignen sich besonders Metalle, die bei der Verarbeitungs- und Verwendungstemperatur der Kontaktmasse mit dem in der Masse enthaltenen Kohlenstoff keine die Eigenschaften der mit der Masse erzeugten Verbindung schädigende Reaktionsprodukte bilden. Neben reinen und niedrig legierten Metallen, wie z. B. Eisen, Kupfer oder Aluminium, sind Zusätze von Metallegierungen, wie z. B. Messing, oder auch von Gemischen verschiedener Metalle gegebenenfalls vorteilhaft. Die Korngröße des Metalls soll höchstens 1 mm betragen, wobei unter Korngröße der Äquivalentdurchmesser zu verstehen ist, so daß auch Metallspäne mit einer Länge >1 mm und einer Breite und Dicke <1 mm der vorteilhaften Ausführungsform zugehören. Spanartige Kornformen sind auch insoweit vorteilhaft, als bedingt durch Orientierungseffekte beim Verarbeiten der Kontaktmasse Verbindungen mit einem besonders kleinen thermischen und elektrischen Querwiderstand hergestellt werden können.

Als Graphitanteil der Feststoffkomponente sind Naturgraphit und Elektrographit gleichermaßen geeignet. Wegen der im allgemeinen größeren Anisometrie von Naturgraphitkörnern oder -flocken können mit Naturgraphit die für Späne beschriebenen Orientierungseffekte verstärkt und Verbindungen mit einem sehr kleinen Querwiderstand erzeugt werden. Die Korngröße des in der Masse verwendeten Graphits ist im allgemeinen der Breite des zu füllenden Spalts proportional, bevorzugt werden aber Graphitpulver mit einer maximalen Korngröße <100 µm, die eine besonders günstige Plastizität und Homogenität aufweisen. Eine geeignete Korngrößenverteilung ist beispielsweise:

| 63 – 100 µm | 30% |
| 35 – 63 µm | 40% |
| < 35 µm | 30% |

Zum Herstellen der Kontaktmasse werden die Feststoffanteile, also Graphit- und Metallpulver, mit der Teerkomponente des Binders bei Raumtemperatur beispielsweise in einem Zwangsmischer gemischt, wobei eine Mischzeit von zehn Minuten im allgemeinen ausreicht. Dieser Teil der Kontaktmasse ist bei Raumtemperatur praktisch unbegrenzt lagerfähig und kann entsprechend auf Vorrat in größerer Menge hergestellt werden. Kurz vor der Anwendung der Kontaktmasse wird der Härtungskatalysator in die Epoxidharzkomponente des Binders eingerührt, die homogene Lösung einem aliquoten Teil des Feststoff-Teer-Gemischs zugesetzt und der Gesamtansatz mit einem Rührwerk etwa 10 min gerührt. Die eine streichfähige Konsistenz aufweisende fertige Kontaktmasse wird mit Spachteln, Maurerkellen oder auch mit Handpressen oder Spritzpistolen auf die zu verbindenden Körper aufgebracht.

Gemische aus Epoxidharze und Teer enthaltende Massen sind als korrosionsfeste Anstrichmittel und Beschichtungen für Beton- und Stahlflächen bekanntgeworden. Derartige Massen sind jedoch nur für verhältnismäßig niedrige Temperaturen brauchbar und weisen zudem einen sehr hohen thermischen und elektrischen Widerstand auf. Die erfindungsgemäße Kontaktmasse, die eine ähnlich gute Haftung an keramischen und metallischen Oberflächen und ein sehr geringes Schrumpfen beim Härten der Harzkomponente aufweist, zeichnet sich darüber hinaus durch thermische Stabilität und den geringen thermischen und elektrischen Widerstand im gesamten Anwendungsbereich aus. Die günstigen mechanischen und Leitereigenschaften werden überraschend unabhängig von der Erhitzungsgeschwindigkeit und anderen Erhitzungsbedingungen erreicht, so daß die Masse gegen im Betrieb unvermeidliche Parameteränderungen weitgehend invariant und für die Herstellung einer Vielzahl verschieden belasteter Verbindungen geeignet ist. Die Anzahl der bisher für verschiedene Verwendungszwecke nötigen Kontakt- oder Kittmassen kann entsprechend wesentlich verringert werden und mit der erfindungsmäßigen Masse hergestellte Verbindungen weisen eine besonders günstige Betriebssicherheit auf.

Anhand von Beispielen wird im folgenden besonders die Verwendung der Kontaktmasse und die Eigenschaften der mit der Masse geschaffenen Verbindungen erläutert.

### Beispiel 1

Zum Herstellen einer mechanisch stabilen, einen kleinen Übergangswiderstand aufweisende Verbindung zwischen einer bei der Schmelzflußelektrolyse zur Erzeugung von Aluminium verwendete Kohlenstoff-Anode und einem zapfenförmigen metallischen Leiter wurde wie oben im einzelnen beschrieben 71 Gew.-Teile Feststoff und 14 Gew.-Teile Kokereiteer und 15 Gew.-Teile Epoxidharz und 3 Gew.-Teile Härter gemischt und beide Mischungsteile vereinigt. Der Gesamtbinderanteil betrug entsprechend 29 Gew.-Teile, die Feststoffkomponente bestand aus Aluminiumgrieß und Graphitpulver im Verhältnis 1 : 1. Die maximale Korngröße des Grießes war etwa 0,3 mm, das Graphitpulver wies folgende Korngrößenverteilung auf:

| 63 – 100 µm | 20% |
| 35 – 63 µm | 45% |
| < 35 µm | 35% |

Der zapfenförmige metallische Leiter wurde in eine Ausnehmung der Anode eingebracht und der etwa 6 mm breite Spalt zwischen der Zapfenoberfläche und der Oberfläche der Ausnehmung mit der Kontaktmasse ausgespachtelt. Die Harzkomponente war bei Raumtemperatur nach etwa 15 bis 18 h vollständig ausgehärtet. Nach Erhitzen auf 600°C, was etwa der unter Betriebsbedingungen maximal erreichten Temperatur entspricht, betrug der spezifische elektrische Widerstand der teilverkokten Kontaktsmasse ca. 400 µΩm. Unter den gleichen Bedingungen hergestellte, ein Steinkohlenteerpech enthaltende Masse wies einen Widerstand von etwa 500 µΩm. Der Widerstand der mit der erfindungsgemäßen Masse hergestellten Verbindung ist somit um rund 20% kleiner als der Widerstand einer üblicherweise verwendeten Kontaktmasse und entspricht dem Widerstand einer durch Ausgießen des Spalts mit Gußeisen hergestellten Verbindung. Dieses Verfahren ist jedoch technisch sehr aufwendig und der durch Aufarbeiten der Reste der verbrauchten Anoden gewonnene Kohlenstoff ist mehr oder weniger stark durch Eisen verunreinigt.

## Beispiel 2

Für den kathodischen Boden einer Zelle zur schmelzflußelektrolytischen Erzeugung von Aluminium bestimmte Kohlenstoff- und Graphitblöcke sind zur Aufnahme der Stromschienen mit nutenförmigen Ausnehmungen versehen. Es ist bekannt, den verbleibenden Spalt zwischen den metallischen Schienen und der Oberfläche der Ausnehmung mit Gußeisen auszugießen, wofür — wie oben beschrieben — ein hoher Aufwand nötig ist. Nachteilig sind dabei auch die in den Blöcken schockartig erzeugten Spannungen, die ein Reißen der Blöcke bewirken können. Man verwendet daher ebenfalls Kontaktmassen mit bituminösen Bindern, die jedoch einen verhältnismäßig großen elektrischen Widerstand aufweisen, z. T. bedingt durch Ablösen der Masse von den Kontaktflächen bei höheren Temperaturen.

Die zum Einkitten der Stromschienen in Kohlenstoffblöcke verwendete erfindungsgemäße Kontaktmasse wies folgende Zusammensetzung auf:

22 Teile Binder (10 Teile Epoxidharz, 12 Teile Teer)
2 Teile Härter
78 Teile Feststoff (Eisen/Graphit = 3 : 1)

Es wurden spanförmige Eisen- bzw. Stahlpartikel verarbeitet, die eine Länge bis zu 3 mm und eine Breite und Dicke von etwa 0,5 mm aufwiesen. Die Masse wurde mit einer Spritzpistole aufgebracht und die Verbindung dann innerhalb von etwa 4 h auf 900°C erhitzt. Der spezifische elektrische Widerstand der Verbindung änderte sich dabei wie folgt:

| Temperatur | Spez. elektr. Widerstand |
|---|---|
| 20°C | 50 000 μΩm |
| 300°C | 2 000 μΩm |
| 600°C | 200 μΩm |
| 900°C | 40 μΩm |

Bei der Verwendungstemperatur, die etwa 900°C beträgt, ist der Widerstand der verkokten Kontaktmasse praktisch gleich dem Widerstand des anliegenden Kohlenstoffblocks.

## Beispiel 3

Als Masse zum Ausfüllen der Fuge zwischen Kohlenstoffsteinschichten und Ofenpanzer eines Hochofens wurde eine Kontaktmasse folgender Zusammensetzung verwendet:

17 Teile Binder (7 Teile Epoxidharz, 10 Teile Kokereiteer)
1,5 Teile Härter
83 Teile Feststoff (Eisen/Graphit = 2 : 1)

Graphitpulver:
| 63 – 100 μm | 40% |
|---|---|
| 35 – 63 μm | 45% |
| < 35 μm | 15% |

Eisen wurde in Form von Spänen verarbeitet, der Härter war Hexamethylentetramin. Zweck der Kontaktmasse ist eine Senkung des Wärmewiderstands zwischen Ofenzustellung und gekühltem Ofenpanzer und entsprechend die Erhöhung des Wärmeflusses. Die Temperatur in der Verbindung beträgt in Abhängigkeit von den für die Zustellung verwendeten Steinsorten und der Intensivität der Kühlung etwa 100 bis 300°C. Die Wärmeleitfähigkeit der Kontaktmasse ist in diesem Temperaturbereich 6 W/m K und entspricht damit der Wärmeleitfähigkeit der anliegenden Kohlenstoffsteine. Mit bekannten Massen ist zwar eine Wärmeleitfähigkeit etwa gleicher Größenordnung erzielt worden, diese Massen weisen jedoch nur eine begrenzte mechanische Stabilität auf. Besonders häufig ist ein Zerbröckeln der Massen zu beobachten, wodurch besonders Reparaturarbeiten erschwert wurden. Die erfindungsgemäße Masse bildet demgegenüber einen stabilen monolithischen Körper.

## Patentansprüche

1. Kalt verarbeitbare einen teerhaltigen carbonisierbaren Binder und als Feststoff Graphit- und Metallpulver enthaltende Kontaktmasse, dadurch gekennzeichnet, daß die Masse als Binder ein Gemisch aus Epoxidharz mit einem Schmelzpunkt von weniger als 5°C und einem Teer, der 5 bis 15 Gew.-% in Benzol unlösliche Anteile und einen Verkokungsrückstand von wenigstens 20% aufweist, und zum Härten des Epoxidharzes einen säurefreien Härter enthält.

2. Kontaktmasse nach Patentanspruch 1, bestehend aus 15 bis 30 Gew.-Teilen Binder, 65 bis 85 Gew.-Teilen Feststoff und 1 bis 5 Teilen Härter.

3. Kontaktmasse nach den Patentansprüchen 1 und 2, dadurch gekennzeichnet, daß das Bindergemisch 5 bis 15 Gew.-Teile Epoxidharz und 8 bis 20 Gew.-Teile Teer enthält.

4. Kontaktmasse nach den Patentansprüchen 1 bis 3, dadurch gekennzeichnet, daß das Gewichtsverhältnis Metallpulver/Graphitpulver im Feststoffgemisch 1 : 1 bis 3 : 1 beträgt.

5. Kontaktmasse nach den Patentansprüchen 1 bis 4, dadurch gekennzeichnet, daß die Korngröße des Metallpulvers weniger als 1000 μm und des Graphitpulvers weniger als 100 μm betragen.

## Claims

1. Contact paste composition being used at low temperatures consisting of graphite and metal powder and a carbonizable binder which binder comprises a mixture of epoxy resin having a melting point below 5°C, a tar containing 5 to 15% benzene insoluble matter and having a coking value of at least 20%, and an acid-free hardener to cure the resin.

2. Contact past as defined in claim 1 comprising 15 to 30 parts by weight of binder, 65 to 85 parts by weight of graphite and metal powder and 1 to 5 parts by weight of hardener.

3. Contact paste as defined in claim 1 and 2 wherein the binder mixture consists of 5 to 15 parts by weight epoxy resin and 8 to 20 parts by weight tar.

4. Contact paste as defined in claim 1 wherein the weight ratio metal powder/graphite powder amounts to 1 : 1 to 3 : 1.

5. Contact past as defined in claim 1 and claim 4 wherein the particle size of the metal powder is less than 1000 μm and that of the graphite powder is less than 100 μm.

## Revendications

1. Masse de contact, susceptible d'être travaillée à froid, masse comportant un liant carbonisable contenant du goudron et comportant comme matière solide de la poudre de graphite et une poudre métallique, masse caractérisée en ce qu'elle contient comme liant, un mélange de résine époxyde avec un point de fusion inférieur à 5°C et d'un goudron, qui présente 5 à 15% en poids de parties insolubles dans le benzol et un résidu de cokéfaction d'au moins 20%, cette masse de contact contenant en outre pour le durcissement de la résine époxyde, un durcisseur non acide.

2. Masse de contact selon la revendication 1, caractérisée en ce qu'elle comporte 15 à 30 parties en poids de liant, 65 à 85 parties en poids de matière solide et 1 à 5 parties de durcisseur.

3. Masse de contact selon l'une quelconque des revendications 1 et 2, caractérisée en ce que le mélange faisant fonction de liant contient 5 à 15 parties en poids de résine époxide et 8 à 20 parties en poids de goudron.

4. Masse de contact selon l'une quelconque des revendications 1 à 3, caractérisée en ce que le rapport en poids de la poudre métallique à la poudre de graphite dans le mélange de matière solide, est de 1 : 1 à 3 : 1.

5. Masse de contact selon l'une quelconque des revendications 1 à 4, caractérisée en ce que la grosseur des grains de la poudre métallique est inférieure à 1000 μm et celle de la poudre de graphite inférieure à 100 μm.